# EUROPEAN PATENT APPLICATION

(11) **EP 1 629 724 A1**
(43) Date of publication of application: **01.03.2006**
(21) Application number: 04104118.7
(22) Date of filing: 27.08.2004
(51) Int. Cl.: A23L 1/22, A23B 4/20

(54) **The use of glycine and/or a glycine derivative as antibacterial agent in foods and/or drinks**

(71) Applicant: PURAC Biochem BV, 4206 AC Gorinchem (NL)
(72) Inventor: Bontenbal, Edwin, Elize Willem, 6701 CE, Wageningen (NL); de Vegt, Bert, Theo, 3052 HC, Rotterdam (NL)
(74) Representative: Beetz, Tom

(57) **Abstract**

The invention relates to the use of glycine and/or a glycine derivative as antibacterial agent in foods and/or drinks with the proviso that in addition to said glycine and/or glycine derivative no hetero-saccharide containing macromolecule is used, nor 1,5 D-anhydrofructose is used as antibacterial agent in said foods and drinks. Preferably glycine and/or a glycine derivative are used as sole antibacterial agent in foods and/or drinks.

The current preservation methods, e.g. salt addition, pH regulation, nitrite addition and processing techniques as for example heat treatment, are not universally suitable for all food and drink applications because they affect product quality with respect to taste, texture and flavour. Further, they are not effective against most food borne pathogens.

Furthermore, the current preservation techniques do not prevent food-spoilage and/or food poisoning as consequences of e.g. temperature-abuse and/or contamination due to e.g. improper handling or improper preparation of the food and drink products.

It was found that glycine and/or a glycine derivative overcomes the problems of the current preservation methods and further provides a means for prevention of consequences as food spoilage and/or food poisoning by pathogenic bacteria due to e.g. temperature-abuse and/or contamination of food and drink products.

## Description

### [FIELD OF THE INVENTION]

This invention relates to the use of glycine and/or a glycine derivative as antibacterial agent in foods and drinks. Said antibacterial agent is in particular applied in refrigerated foods and drinks and more in particular in fresh or cooked meat (including poultry and fish) products. Further, said antibacterial agent is in particular used against bacteria from the genus Escherichia coli, Salmonella and Listeria in said food and drink products. The glycine and/or glycine derivative may be combined with one or more organic acids and/or their salts, in particular with lactic acid and/or its salts.

The invention further relates to foods and drinks comprising glycine and/or a glycine derivative as antibacterial agent.

### [BACKGROUND OF THE INVENTION]

Normally bacterial growth in food and drink applications can be controlled and/or prevented by means of pH regulation, water activity control, addition of quality preserving agents as e.g. nitrite and/or using various processing techniques as for example heat treatment, irradiation or high-pressure treatment.

Controlling the water activity in products is possible by means of e.g. salt addition. Controlling or preventing bacterial growth in products by means of salt addition however requires high salt concentrations. Said high concentrations often lead to a loss of taste because the product becomes too salty. Further, in protein-containing products as for example meat (this is including fish and poultry) said high salt concentrations may lead to deterioration of the texture of the product. Salt addition for controlling bacterial growth in these types of products is thus either insufficient (in cases of low salt addition) or leads to product quality decrease because of deterioration of taste and texture of the product. Furthermore, a too high salt dosage is also not desired with respect to health issues as for example heart and vascular diseases or blood pressure. Controlling bacterial growth for preservation purposes by means of salt addition in foods and drinks is thus not always a satisfactory option.

Regulation of the pH as means for controlling bacterial growth is in some product applications also restricted because of loss of taste of the product and/or loss of texture of the product, especially in protein-rich food and drink products. Examples of products of which the quality is sensitive to pH changes are drinks and dairy products, salads and other vegetable products, dried foods and convenient foods as e.g. ready-to-eat meals, and especially meat (=including fish and poultry) products. Further, some pathogenic bacteria are relatively insensitive to acid addition; a too high acid dosage would be required in order to stop bacterial growth, let alone to kill bacteria. For example, bacterial growth of Clostridium and Listeria can be stopped at a pH lower than 4.5. Growth of Campylobacter bacteria and Salmonella bacteria can be stopped at a pH lower than respectively 4.0 and 3.8.

Nitrite is added in cured meat (including poultry and fish) applications for the purpose of preserving product quality. Nitrite is able to stop bacterial growth of some types of bacteria as for example Clostridium. In some cases nitrite is added as colouring agent to maintain a certain colour in the meat product. Due to this colouring effect of nitrite it is not wanted in all meat applications. Examples of uncured, not nitrite-containing, product applications are (German) sausages, chicken and turkey meat and roast beef. At present legislation is aimed at minimisation of the use of nitrite in food and drink applications. Further, some major food-borne pathogenic bacteria are relatively insensitive to nitrite as for example Listeria.

Processing techniques as for example heat treatment, irradiation or high-pressure treatment as method for preservation of products is not always applicable to all food and drink applications. Salads and other vegetable products, drinks and dairy products, ready-to-eat meals and some types of fish as for example shrimps are not to be heated prior to consumption because heat treatment will deteriorate the product quality. Steak tartar or carpaccio for example is directly consumed without heat treatment or with only partial heat-treatment (e.g. medium cooked steak). Further, not all bacteria are heat sensitive and a long heat treatment at high temperature would be required to achieve a stop of bacterial growth and further kill the present bacteria.

Irradiation and high-pressure treatment are relatively expensive methods and not fully accepted by consumers. High-pressure treatment causes in some products a loss of texture as e.g. in meat products.

Said above-mentioned methods of salt addition, pH regulation, nitrite addition and processing techniques as e.g. heat treatment are not always satisfactory for the purpose of preservation of foods and drinks. They cause specific problems in specific applications. The general problem is that these methods are not universally suitable for all food and drink applications because they affect product quality with respect to taste and texture. Further, these methods are not effective against all food borne pathogens.

Furthermore, the above-mentioned methods do not prevent food spoilage and/or food poisoning as consequences of e.g. temperature-abuse and/or contamination of food and drink products after treatment. It is known that one of the most important causes of food spoilage and food poisoning is contamination due to incorrect handling of food and drink products. Furthermore, products are often stored at improper conditions (e.g. too humid and/or too high temperatures) or are improperly prepared (e.g. the cooking of a steak while the internal temperature remains too low to kill bacteria). Temperature-abuse (e.g. incidental storage at high temperature) can cause the in the product already present but inactivated bacteria to grow again resulting in food-spoilage and/or food poisoning by pathogenic bacteria. Above-mentioned processing techniques may be applied for product preservation but will not prevent the consequences of contamination.

The invention provides an effective alternative to overcome the above-mentioned problems in preservation of foods and drinks and further provides a means for prevention of further consequences as food spoilage and/or food poisoning by pathogenic bacteria of food and drink products due to e.g. temperature-abuse and/or contamination due to e.g. improper handling and/or improper preparation. The invention relates to the use of glycine and/or a glycine derivative as antibacterial agent in foods or drinks with the proviso that in addition to said glycine and/or glycine derivative no hetero-saccharide containing macromolecule is used, nor 1,5-D-anhydrofructose is used as antibacterial agent in said foods and drinks.

It is known that glycine has an antibacterial activity and can thus be used as antibacterial agent for preservation of food and drink products. However, up till now it has also been the general understanding that glycine cannot be used in foods as the sole antibacterial agent.

This is described in patent US 6200619 B1. Said patent discloses the use of water-soluble hemicellulose as preserving agent for foods and drinks. Water-soluble hemicellulose is a polysaccharide containing several constituent saccharides. It exhibits antibacterial activity and can be effectively applied as a preserving agent. Glycine is described as auxiliary preserving agent that is used to further enhance the antibacterial activity of said water-soluble hemicellulose. This enhanced effect is demonstrated at temperatures of 30 °C and higher in two applications involving a standard medium at pH 7.2 containing an unknown strain of *Escherichia coli* and involving fish paste rolls. It is stated that preserving agents such as glycine cannot be added to food and drinks in amounts required to provide adequate preservation effects.

EP 1252827A1 and US 4820520 also disclose the use of glycine as enhancer of antibacterial activity. EP 1252827A1 describes the use of 1,5-D-anhydrofructose as food preservative. Again the antibacterial activity of said component can be further enhanced by combination with glycine. The enhanced effect of glycine is demonstrated at temperatures of 15°C and higher in two specific applications, noodles and custard cream. Patent US 4820520 describes an antiseptic agent for foods and drinks comprising of a pectin decomposition product with a molecular weight of between 600 to 5000. Pectin is a polymeric substance comprising galacturonic acid and several different neutral saccharides. Said pectin decomposition product comprises the same constituents as those of pectin. Combination with glycine enhances the antibacterial activity of said pectin decomposition product. This enhancement of glycine is demonstrated at a temperature of 37 °C in a substitute bouillon culture medium containing a test strain of *Escherichia coli* US/41.

Above-mentioned patents describe a combination including a hetero-saccharide containing macromolecule and glycine necessary to achieve the required preservation effect in foods and drinks. Further, the type of applications in which glycine is used in combination with said components are in the field of non-refrigerated and non-meat containing products. Furthermore, the antibacterial effect is demonstrated at temperatures of 15 °C and higher.

The above-mentioned patents describe the application of glycine in combination with other antibacterial agents for preservation purposes only.

We have found that glycine and/or a glycine derivative can effectively be used as a sole antibacterial agent in concentrations that are still acceptable in food and drink products without negatively affecting the product quality with respect to for example taste and texture. We have found that glycine and/or a glycine derivative can be used as sole antibacterial agent for preservation purposes and further to prevent the consequences of contamination of food and drink products as food spoilage and/or food poisoning by pathogenic bacteria due to temperature-abuse and/or contamination. It is not needed to add an auxiliary antibacterial agent to achieve the desired preservation effect in contrast to the results described in above-mentioned patents. This results not only in lower material costs but also in a higher product quality. Products are obtained with less auxiliary ingredients added while maintaining and even improving the quality and shelf life of said products. Further, this is in line with legislation that is aimed at minimisation of the use of additives in food and drink applications. Furthermore, the products obtained are relatively safe with respect to the consequences of temperature-abuse or contamination.

### [DETAILED DESCRIPTION OF THE INVENTION]

The invention is directed to the use of glycine and/or a glycine derivative as antibacterial agent in foods or drinks with the proviso that in addition to said glycine and/or glycine derivative no hetero-saccharide containing macromolecule is used, nor 1,5-D-anhydrofructose is used as antibacterial agent in said foods and drinks.

A glycine derivative refers to a salt of glycine as for example and not limited to sodium glycinate, potassium glycinate, magnesium glycinate, ammonium glycinate or calcium glycinate. Sodium glycinate for example was found to be very effective as antibacterial agent.

Glycine and/or a glycine derivative can very well be applied as antibacterial agent in non-refrigerated products as for example soups, noodles, creams and some sausages and dried products.

We have found that glycine and/or a glycine derivative can suitably be used in refrigerated food and drink products. The use of glycine and/or a glycine derivative has specific advantages in refrigerated products, because it is often not desired to apply other methods for preservation for this type of products due to deterioration of the product quality (taste, texture, flavour). Further, refrigerated products are especially sensitive to temperature-abuse and/or contamination due to improper handling of the products. Temperature abuse may occur during transport of the product from the supplier to the store (e.g. improper cooling of the container of truck) but often also occurs during transport of the product from the store to home. Even in the case of incidental temperature increase of the refrigerated product, the food safety is ensured when glycine and/or a glycine derivative is applied. Examples of such refrigerated products are meat products (cured and/or uncured, fresh and/or cooked), salads and other vegetable products, drinks and dairy products, semi-processed foods, convenient foods as e.g. ready-to-eat meals and dried food products. In Japan refrigerated products are usually kept at 10 degrees Celsius, in Europe at 7 degrees Celsius and in the United States of America at 4 degrees Celsius. The invention is therefore directed to refrigerated food and refrigerated drink products that are usually stored at a temperature of 12 degrees Celsius or lower.

Glycine and/or a glycine derivative are found to be very effective as antibacterial agent in meat applications. Salt addition and pH regulation are often not an option for preservation since they deteriorate the product quality with respect to taste and texture of the meat products. Nitrite cannot always be used due to the colouring effect. Further, legislation is aimed at minimisation of the use of nitrite in food and drink products as e.g. meat products. Furthermore, the above-mentioned methods and alternative processing techniques as e.g. heat treatment for preservation do not prevent food spoilage and/or food poisoning as consequences of temperature-abuse and/or contamination in contrast to glycine and/or a glycine derivative.

In particular, glycine and/or a glycine derivative are effective as antibacterial agent in fresh meat applications. Some fresh meat products are used for direct consumption (e.g. filet américain, steak tartar, sushi, or carpaccio) without any heat treatment or with heat treatment insufficient to kill bacteria. Other meat products are consumed after application of only partial heat treatment, intentionally applied as e.g. for medium cooked steak or unintentionally applied due to improper preparation or improper handling of the food products. The use of glycine and/or a glycine derivative as antibacterial agent ensures food safety even in the case of partial heat-treatment.

We have also found that glycine and/or a glycine derivative as antibacterial agent is very effective against major food borne pathogens as Listeria, Salmonella, *Escherichia coli,* Campylobacter and Clostridium. These bacteria are often found in meat (= including poultry and fish) applications and in particular in fresh meat applications that have not undergone any preserving treatment. The antibacterial activity not only includes bacteriostatic activity preventing further bacterial growth but also includes for some bacteria bacteriocidal activity that actually reduces the bacterial number.

According to the invention glycine and/or a glycine derivative can effectively be used as antibacterial agent against Listeria bacteria and in particular against *Listeria monocytogenes.*

Listeria bacteria often end up in food and drink products due to contamination. Listeria is commonly present and it can grow at low temperatures. It is relatively insensitive to refrigeration temperatures. It is thus very difficult to prevent contamination of products and in particular of meat products. The use of glycine and/or a glycine derivative as antibacterial agent prevents the food-poisoning consequences of contamination with Listeria. Further, Listeria is relatively insensitive to nitrite and pH regulation. The optimal pH for growth of Listeria is about 6, which is about the common pH in fresh or cooked meat. Further pH reduction would negatively affect the taste and texture of said meat products. Glycine and/or a glycine derivative were found to be effective as antibacterial agent and are a satisfactory alternative to nitrite and acid addition. Glycine concentrations of 0.2 to 3 wt% based on total weight of product show antibacterial activity against Listeria and in particular *Listeria monocytogenes.* Glycine concentrations of 0.2 to 1.5 wt% based on total weight of product were found to be suited in ensuring taste of the product.

We also have found that glycine and/or a glycine derivative as antibacterial agent is effective against Salmonella, *E*. *coli* and Campylobacter and in particular against *Salmonella typhimurium, Salmonella enteriditis, Escherichia coli* 0157:H7 and *Campylobacter jejuni.*

Bacteria as *E*. *coli*, Salmonella and Campylobacter are present in the intestines of animals and often end up in the fresh meat that is used for direct consumption. Above-mentioned bacteria are relatively insensitive to control of pH, water activity or addition of nitrite. Acid, salt or nitrite would have to be added in high concentrations in order to achieve some effect on bacteria growth, but these high concentrations negatively affect the product quality in terms of a bad taste and a loss of texture of the meat. The use of glycine and/or a glycine derivative as antibacterial agent is found to be effective against said bacteria without loss of taste and without loss of texture.

Concentrations of about 0.5 wt% glycine based on total weight of the product already turn out to have antibacterial activity at a temperature of 12 degrees Celsius against *E*. *coli,* in particular *E*.*coli* O157:H7. Concentrations higher than 0.5 wt% glycine based on total weight of the product exert bacteriocidal activity on the bacterial number of *E coli,* in particular *E.coli* O157:H7. A concentration of 1.0 wt% glycine based on total weight of the product even can reduce the bacterial number of *E. coli,* in particular *E. coli* 0157:H7, from about 4 to between 2 and 3 log cfu per g. of product in 3 to 5 days of storage at 12 degrees Celsius. Even in the case of temperature-abuse the addition of 0.5 wt% glycine or higher showed to be effective. Glycine concentrations of 0.2 to 3 wt% based on total weight of product were found to be effective as antibacterial agent and glycine concentrations of 0.2 to 1.5 wt% based on total weight of product were found to be suited in ensuring taste of the product.

Concentrations of 0.5 wt% glycine based on total weight of product have immediate bacteriocidal effects on Salmonella, and in particular *Salmonella typhimurium* and *Salmonella enteriditis.* The bacterial number can be reduced from about 2.3, 2.4 to about 1.00 in only a few days of storage at 12 degrees Celsius. Concentrations of 1.0 wt% of glycine based on total weight of product or higher can completely reduce the bacterial number of Salmonella, in particular *Salmonella typhimurium,* to zero in less than 8 days. A concentration of 0.5 wt% sodium glycinate based on total weight of product also has a comparable bacteriocidal effect on above-mentioned bacteria. Glycine concentrations of 0.2 to 3 wt% based on total weight of product show antibacterial activity against Salmonella, and in particular *Salmonella typhimurium* and *Salmonella enteriditis.* Glycine concentrations of 0.2 to 1.5 wt% based on total weight of product were found to be suited in ensuring taste of the product.

Tests showed that a concentration of about 1 to 1.5 wt% of glycine based on total weight of product starts to affect the taste of said product. In said product no auxiliary antibacterial agents and no other taste affecting ingredients were present. A glycine concentration above 1.5 wt% based on total weight of the product gives the product a sweet taste. Dependent on the type of product this sweet taste is acceptable or not. In sweet drinks for example the sweetening effect of glycine is not considered a problem. Accordingly the maximally acceptable glycine concentration in terms of not negatively affecting taste can be increased to concentrations above 1.5 wt% glycine based on total weight of the product. Further, dependent on the presence of other taste affecting ingredients in the product as for example masking agents, the maximum concentration of glycine and/or a glycine derivative can also be increased up to a point at which the taste starts to be negatively affected by the presence of glycine and/or said glycine derivative.

According to the invention glycine and/or a glycine derivative can also be used as antibacterial agent against Clostridium and in particular *Clostridium botulinum* and *Clostridium perfringens.* Clostridium is often present in meat applications. Nitrite addition is effective against Clostridium but cannot always be used due to the colouring effect. Heat treatment is often not effective; spores of Clostridium are not killed at the regular cooking temperatures. Further, Clostridium is relatively insensitive to refrigeration temperatures and can grow well at low temperatures. Clostridium can be stopped in growth at a pH lower than 4. The acid dosage required to achieve this pH would however lead to deterioration of the taste of the product and of the protein structure and thus texture of the product. Glycine and/or a glycine derivative were found to be an effective antibacterial agent against Clostridium. Glycine concentrations of 0.2 to 3 wt% based on total weight of product result in satisfactory antibacterial activity against Clostridium and in particular against *Clostridium botulinum* and *Clostridium perfringens.* Concentrations of 0.2 to 1.5 wt% glycine and/or derivatives based on total weight of the product were found to be suited in ensuring taste of the product.

It was found that the use of glycine and/or a glycine derivative as antibacterial agent in foods and drinks may be combined with one or more organic acids and/or one or more of their salts as for example benzoic acid, ascorbic acid, lactic acid, citric acid, acetic acid. The organic acid and/or its salt may be applied stand alone with glycine and/or a glycine derivative or may be applied in mixtures of organic acids and/or one or more of their salts as for example a mixture of potassium lactate and sodium di-acetate in combination with glycine and/or a glycine derivative.

Said combinations and/or mixtures of for example lactic acid and/or its salt with glycine and/or a glycine derivative result in an antibacterial agent with various functional properties in addition to antibacterial activity. Examples of these added functional properties are (mineral) enrichment or fortification in general which has several positive health benefits, improvement of flavour, colour preservation and pH regulation. Examples of a lactic acid salt are sodium lactate, calcium lactate, potassium lactate, ferrous lactate, zinc lactate, magnesium lactate. In some applications said combinations of an organic acid and/or its salt with glycine and/or a glycine derivative result in an enhanced antibacterial activity. Again, mixtures of organic acids and/or one or more of their salts as e.g. potassium lactate and sodium di-acetate may also be used in combination with glycine and/or a glycine derivative.

It was found that the use of glycine and/or a glycine derivative as antibacterial agent in foods and drinks can be combined with lactic acid and/or its salt in concentrations of 0.2 to 3 wt% by weight based on said foods and drinks.

In some cases it is advantageous to combine the use of glycine and/or a glycine derivative with one or more of the earlier mentioned processing techniques for preservation as e.g. heat treatment, irradiation and/or high-pressure treatment.

The invention further relates to a food or drink comprising glycine and/or a glycine derivative as antibacterial agent with the proviso that in addition to said glycine and/or glycine derivative no hetero-saccharide containing macromolecule is present, nor 1,5-D-anhydrofructose is present as antibacterial agent in said foods and drinks. Preferably the food or drink comprises glycine and/or a glycine derivative as sole antibacterial agent without any other antibacterial agent present in said food or drink. Said food or drink is of high quality since it comprises no auxiliary antibacterial agent. Further, taste and texture are not affected by the presence of glycine and/or a glycine derivative either in or without combination with one or more organic acids and/or one or more of their salts. Further, the food safety of said food or drink is ensured even in case of contamination or in case of temperature-abuse. The present invention is further illustrated by the following examples, which are not to be construed as being limitative.

### Example 1

Frozen ground beef was defrosted and divided into portions of 1.7 kg and mixed with different concentrations of glycine, 0.5 wt%, 1.0 wt% and 1.5 wt% based on total weight of meat portion. Subsequently the meat was minced once through a 6 mm plate in a disinfected meat mincer.

Each portion (1.5 kg) was inoculated with a suspension of E. coli O157:H7 (ATCC 43895) to a final level of about 10⁴ cfu per g of product. Prior to inoculation the culture with *E. coli O157:H7,* kept on slant, was pre-cultivated twice in Brain Heart Infusion (BHI, Oxoid CM 225) during 24 hours at 30 degrees Celsius. The full-grown culture was diluted in physiological peptone saline (PPS) to contain the desired level inoculation.

The inoculated meat was minced twice through a 3 mm plate after which the ground beef was packed in portions of 80 g in a modified atmosphere (MAP) consisting of 70% 02 and 30% CO2 with a gas volume of about 120 ml. All packages were stored at 12 degrees Celsius during 12 days. The temperature during the experiment was registered using a data logger.

Samples of each portion of ground beef were taken in duplicate for microbiological analyses at appropriate time intervals. A sample of 20 g was taken aseptically from each portion. The sample was diluted 10-fold in physiological peptone saline (PPS) and homogenised in a stomacher for 1 minute. Additional serial dilutions were made in PPS. Numbers of *E*. *coli* O157:H7 bacteria were determined using Sorbitol MacConkey agar (SMAC, Oxoid CM813) as mentioned in NEN-ISO 16649-2:2001. The plates were incubated at 42 degrees Celsius during 1 day.

Table 1 shows the results (in duplicate) of the microbiological analyses of ground beef inoculated with *E. coli* 0157:H7 and with three different concentrations of glycine added during storage in MAP at 12 degrees Celsius.

**Table 1: Results of E.coli O157:H7 bacterial count on ground beef with different glycine concentrations in MAP during storage at 12 degrees Celsius.**

| Additive | Bacterial counts in log cfu per g of product after storage during | | | | | |
|---|---|---|---|---|---|---|
| | 0 days | 3 days | 5 days | 7 days | 10 days | 12 days |
| Control (no additive) | 3.96 | 5.67 | 5.46 | 5.26 | 5.72 | 5.54 |
| | 4.08 | 4.94 | 5.34 | 5.92 | 5.53 | 5.58 |
| 0.5 wt% glycine | 4.03 | 4.26 | 3.78 | 3.90 | 3.86 | 3.30 |
| | 3.98 | - | 4.38 | 4.28 | 3.73 | 3.49 |
| 1.0 wt% glycine | 4.00 | 4.20 | 4.26 | 3.36 | 2.30 | 2.58 |
| | 4.00 | 3.82 | 3.95 | 3.51 | - | 1.48 |
| 1.5 wt% glycine | 4.03 | 3.94 | 2.85 | 2.30 | 2.00 | 1.30 |
| | 4.05 | 3.87 | 2.85 | 2.00 | 1.70 | 1.78 |

The results show that a concentration of 0.5 wt% of glycine based on total weight of product has antibacterial activity against *E.coli* O157:H7. Concentrations of 1.0 wt% of glycine based on total weight of product show a clear bacteriocidal activity against *E.coli* O157:H7 and even reduce the bacterial number from 4 to 2 log cfu per g of product in 7 days of storage.

### Example 2

Batches of completely cooked chicken sausage were prepared according methods known to the person skilled in the art. The basic composition of the cooked chicken sausage consisted of 91.15 % chicken breast (1% fat), 0.35 % phosphate, 1.50% NaCl salt and 7.00 % water/ice (all by weight of total sausage-product). The sausage was divided in portions to which the following additives were added: glycine in concentrations of 0.5wt%, 1.0 wt% and 2.5 wt% (by weight of total product) and sodium glycinate in concentrations of 0.5 wt% and 1.0 wt% (by weight of total product).

The cooked chicken sausage portions were inoculated with *Salmonella typhimurium* (M90003246/0550). Prior to inoculation the cultures, kept on slants, were pre-cultivated twice in Brain Heart infusion (BHI, Oxoid CM225) for 24 hours at 30 degrees Celsius. The full-grown cultures were diluted in physiological peptone saline (PPS) to obtain a mixture at desired level of inoculation.

The sausage (ca 1000 g) was placed in the bowl of a disinfected laboratory cutter (Scharf), cut into small pieces and inoculated with 10 ml of a suspension of Salmonella to a final level of about 10² or 10³ per g product respectively. After inoculation the cooked chicken sausage was minced and homogenised for 2 minutes. Subsequently the minced product was divided into portions of 40 g and vacuum packaged in plastic pouches with an oxygen permeability of less than 5.0×10⁻¹¹ m³.m⁻².Pa⁻¹.day⁻¹ at 20 degrees Celsius. The packages obtained were stored at 12 degrees Celsius for up to 21 days. During the experiment the temperatures were registered using a data logger.

At appropriate time intervals, samples of minced cooked chicken sausage were taken in duplicate for microbiological analyses. From each single package a sample of 20 g was taken aseptically, diluted 10-fold in PPS and homogenised in a stomacher for 1 minute. Additional serial dilutions were made in PPS. Numbers of Salmonella were determined using Violet Red Bile Glucose Agar (Oxoid CM485). Plates were incubated at 37 degrees Celsius for 1 day.

Table 2 shows the results (in duplicate) of the microbiological analyses of vacuum packed cooked chicken sausage inoculated with *Salmonella typhimurium* and various concentrations of glycine or sodium glycinate added during storage at 12 degrees Celsius.

**Table 2: Results of Salmonella count on vacuum packed cooked chicken sausages with different additives during storage at 12 degrees Celsius.**

| Additive | Bacterial counts in log cfu per g of product after storage during | | | | |
|---|---|---|---|---|---|
| | 0 days | 4 days | 7 days | 14 days | 20 days |
| Control (no additive) | 2.32 | 5.72 | 7.40 | 8.29 | 8.58 |
| | 2.54 | 5.82 | 7.41 | 8.27 | 8.46 |
| 0.5 wt% glycine | 2.38 | 1.00 | 0.48 | 2.28 | 1.00 |
| | 2.32 | 1.00 | 0.60 | 1.71 | 2.23 |
| 1.0 wt% glycine | 2.40 | 1.00 | 0.30 | 0.00 | 0.00 |
| | 2.38 | 1.00 | 0.00 | 0.00 | 0.00 |
| 2.5 wt% glycine | 2.40 | 1.00 | 0.60 | 0.30 | 0.00 |
| | 2.34 | 1.00 | 0.30 | 0.30 | 0.00 |
| 0.5 wt% Na-glycinate | 2.36 | 1.00 | 0.48 | 0.00 | 0.00 |
| | 2.43 | 1.00 | 0.30 | 0.00 | 0.00 |
| 1.0 wt% Na-glycinate | 2.18 | 1.00 | 0.00 | 0.00 | 0.00 |
| | 2.00 | 1.00 | 0.00 | 0.00 | 0.00 |

The results show that glycine concentrations of 0.5 wt% or higher based on total weight of product have antibacterial activity against *Salmonella typhimurium.* Sodium glycinate clearly acts as antibacterial agent in concentrations of 0.5 wt% of higher based on total weight of product. Sodium glycinate has a strong bacteriocidal effect and reduces the bacterial number to 1 log cfu per g of product in only 4 days of storage at 12 degrees Celsius.

### Example 3

Batches of completely cooked sausage without nitrite were prepared according methods known to the person skilled in the art. The basic composition of the cooked sausage consisted of 7% beef (10% fat), 10.2% pork (8% fat), 69% bacon (40% fat), 9.00% water/ice (-2 degrees Celsius), 2.0 % sodium chloride salt, 0.35% spices, 0.35% phosphate, 0.05% sodium ascorbate, 0.05% sodium glutamate and 2.00% wheat starch (percentages all by weight of total product). After addition of the above-mentioned ingredients except for the starch, the sausage was homogenised for several minutes and divided in several portions. The starch was added together with the following additives to different portions of sausage:
- 1.8% potassium lactate (by weight of total product)
- 1.8% potassium lactate + 0.5% glycine (both by weight of total product)
- 1.68% potassium lactate + 0.12% sodium di-acetate + 0.5% glycine (all by weight of total product)

The cooked sausage portions were inoculated with *Listeria monocytogenes,* type 4a (ATCC 19114). The sausage was placed in the bowl of a disinfected laboratory cutter (Scharf), cut into small pieces and inoculated with a suspension of mentioned bacteria to a final level of about 10³ per g product each. After inoculation, the sausages were minced and homogenised for 2 minutes. Subsequently the minced product was divided into portions of 40 g and vacuum packaged in plastic pouches with an oxygen permeability of less than 5.0×10⁻¹¹ m³.m⁻².pa⁻¹.dat⁻¹ at 20 degrees Celsius. The packages obtained were stored at 12 degrees Celsius for up to 12 days. During the experiment the temperatures were registered using a Temptimem® data logger.

At appropriate time intervals, samples of minced cooked sausage were taken in duplicate for microbiological analyses. From each single package a sample of 20 g was taken aseptically, diluted 10-fold in physiological peptone saline (PPS) and homogenised in a stomacher for 1 minute. Additional serial dilutions were made in PPS. Numbers of Listeria were determined using Palcam agar (Oxoid CM877 and SR150). Plates were incubated at 37 degrees Celsius for 2 days.

Table 3 shows the results (in duplicate) of the microbiological analyses of vacuum packed cooked sausage inoculated with *Listeria monocytogenes* and with glycine added in combination with salts of lactic acid and acetic acid during storage at 12 degrees Celsius.

**Table 3: Results of Listeria count on vacuum packed cooked sausages with different additives during storage at 12 degrees Celsius.**

| Additive | Bacterial counts in log cfu per g of product after storage during | | | | |
|---|---|---|---|---|---|
| | 0 days | 3 days | 5 days | 7 days | 12 days |
| Control (no additive) | 2.80 | 5.09 | 7.04 | 8.52 | 8.88 |
| | 2.72 | 4.98 | 7.03 | 8.72 | 8.74 |
| 1.8 wt% Potassium lactate | 2.71 | 2.78 | 2.95 | 4.01 | 5.95 |
| | 2.70 | 2.70 | 2.92 | 4.20 | 5.98 |
| 1.8 wt% potassium lactate + 0.5 wt% glycine | 2.70 | 2.77 | 2.75 | 2.20 | 2.58 |
| | 2.83 | 2.66 | 2.65 | 2.26 | 2.66 |
| 1.69 wt% potassium lactate + 0.12 wt% sodium di-acetate + 0.5 wt% glycine | 2.66 | 2.59 | 2.67 | 1.48 | 1.00 |
| | 2.63 | 2.70 | 2.72 | 2.08 | 1.70 |

The results show that glycine can be used in combination with one or more organic acids and/or one or more of their salts as antibacterial agent.

## Claims

1. The use of glycine and/or a glycine derivative as antibacterial agent in foods and/or drinks with the proviso that in addition to said glycine and/or glycine derivative no hetero-saccharide containing macromolecule is used, nor 1,5-D-anhydrofructose is used as antibacterial agent in said foods and drinks.

2. The use of glycine and/or a glycine derivative according to claim 1 as sole antibacterial agent in foods and/or drinks.

3. The use of glycine and/or a glycine derivative according to claim 1 or 2 in refrigerated foods and/or refrigerated drinks, preferably stored at a temperature of 12 degrees Celsius or lower.

4. The use of glycine and/or a glycine derivative according to claim 1, 2 or 3 as antibacterial agent in meat applications and preferably in fresh meat applications.

5. The use of glycine and/or a glycine derivative according to any of claims 1 to 4 as antibacterial agent against Listeria bacteria and preferably against *Listeria monocytogenes.*

6. The use of glycine and/or a glycine derivative according to any of claims 1 to 4 as antibacterial agent against Salmonella bacteria and preferably against *Salmonella typhimurium* and/or *Salmonella enteriditis.*

7. The use of glycine and/or a glycine derivative according to any of claims 1 to 4 as antibacterial agent against *Escherichia coli* bacteria and preferably against *Escherichia coli* 0157:H7.

8. The use of glycine and/or a glycine derivative according to any of claims 1 to 7 as antibacterial agent in foods and/or drinks combined with one or more organic acids and/or one or more of their salts.

9. The use of glycine and/or a glycine derivative according to claim 8 as antibacterial agent in foods and/or drinks combined with lactic acid and/or its lactate salt.

10. The use of glycine and/or a glycine derivative according to any of claims 1 to 9 as antibacterial agent in concentrations of 0.2 to 3 wt% and preferably 0.2 to 1.5 wt% glycine and/or said glycine derivative by weight based on said foods or drinks.

11. The use of glycine and/or a glycine derivative according to claim 8 or 10 as antibacterial agent in concentrations of 0.2 to 3 wt% of one or more organic acids and/or one or more of their salts based on total weight of product.

12. The use of glycine and/or a glycine derivative according to claim 9 as antibacterial agent in concentrations of 0.2 to 3 wt% lactic acid and/or its salt based on total weight of product.

13. A food or drink comprising glycine and/or a glycine derivative as antibacterial agent with the proviso that in addition to said glycine and/or glycine derivative no hetero-saccharide containing macromolecule is present, nor 1,5-D-anhydrofructose is present as antibacterial agent in said foods and drinks.

14. A food or drink according to claim 13 comprising glycine and/or a glycine derivative as sole antibacterial agent without any other antibacterial agent present in said food or drink.

15. A refrigerated food or refrigerated drink according to claim 13 or 14 preferably stored at a temperature of 12 degrees Celsius or lower.

16. A meat product and preferably a fresh meat product as food or drink according to claim 13, 14 or 15.

17. A food or drink according to any of claims 13 to 16 comprising one or more organic acids and/or one or more of their salts.

18. A food or drink according to claim 17 comprising lactic acid and/or its salt.

19. A food or drink according to any of claims 13 to 18 comprising glycine and/or a glycine derivative as antibacterial agent in concentrations of 0.2 to 3 wt% and preferably 0.2 to 1.5 wt% glycine and/or said derivative by weight based on said food or drink.

20. A food or drink according to claim 17 or 19 comprising one or more organic acids and/or one of more of their salts in concentrations of 0.2 to 3 wt% based on total weight of product.

21. A food or drink according to claim 18 comprising lactic acid and/or its salt in concentrations of 0.2 to 3 wt% lactic acid and/or its salt based on total weight of product.
